# FASCICULE DE BREVET EUROPEEN

(11) **EP 1 398 542 B1**
(45) Date de publication et mention de la délivrance du brevet: **23.11.2005**
(21) Numéro de dépôt: 03292231.2
(22) Date de dépôt: 11.09.2003
(51) Int. Cl.: F16H 25/24

(54) **Détection par pion électrifié de transfert de charge sur écrou secondaire dans un verin à vis**
Funktionsversagensermittlung an Schraubenspindel betätigen, durch Bruch von mit Leiterdraht versehenen Scherstiften
Detection of operation failure on a screw-jack by breaking of a wired shear-pin

(30) Priorité: 11.09.2002 FR 0211228
(43) Date de publication de la demande: 17.03.2004
(73) Titulaire: Goodrich Actuation Systems, 78530 Buc (FR)
(72) Inventeur: Lardy, Pascal, 95420 Saint Gervais (FR); Nevoret, Patrice, 92600 Asnières (FR); Pansanel, Olivier, 95220 Herblay (FR); Dorval, Christian, 92700 Colombes (FR)
(74) Mandataire: Callon de Lamarck, Jean-Robert

(56) Documents cités:
- US-A- 4 644 811
- US-B1- 6 234 034

## Description

L'invention concerne les vérins à vis dits « fail safe », c'est à dire les vérins à vis à deux écrous. Plus particulièrement, l'invention concerne les systèmes de détection de transfert de charge d'un écrou vers l'autre dans de tels vérins.

L'invention s'applique par exemple aux vérins de type « à bille », par exemple quand ces vérins sont utilisés pour l'orientation d'un plan horizontal réglable d'aéronef. L'invention s'applique également à tout système à vis, par exemple à rouleaux ou à galets.

On connaît les vérins comportant un niveau de sécurité supplémentaire en la présence d'un second écrou qui, séparé de la vis par un léger jeu, reprend la charge du premier écrou en cas de défaillance de ce dernier.

Ces dispositifs, certes sécuritaires, présentent le danger qu'un fonctionnement reposant seulement sur le second écrou, après défaillance du premier, ne soit pas détecté. Un dispositif dans une telle situation ne comporte plus son niveau de sécurité supplémentaire, et perd par là son intérêt initial.

On cherche à signaler ce mode de fonctionnement le plus rapidement possible afin d'éviter un mode de panne dormante.

A titre illustratif, on a également proposé dans le US 5 833 033, cette fois dans le domaine de la détection d'usure de plaquettes de freinage dans les véhicules automobiles, une sonde de détection d'usure sous la forme d'une boucle de câble électrique prévue pour être coupée par abrasion. La coupure de la liaison indique la nécessite de remplacer la plaquette de frein. Ce type de dispositif, proposé dans un autre domaine, ne répond pas au souci de détection exacte de l'instant précis où les contraintes sont transmises sur l'écrou secondaire.

Le but de l'invention est de fournir des moyens pour une détection du passage sur écrou secondaire, qui soient fiables tout en étant peu encombrants et peu coûteux.

Le document US 6234034, qui constitue l'état de la technique le plus proche, montre un actionneur de ce type, dont la rotation va être empechée après la rupture d'un pion.

Ce but est atteint selon l'invention grâce à un vérin d'actionnement d'organe mobile comprenant essentiellement une vis d'une part et au moins deux écrous engagés autour de la vis d'autre part, un mouvement relatif entre la vis et les écrous produisant ledit actionnement, caractérisé en ce qu'il comporte un pion parcouru par une liaison électrique, un élément de transmission d'effort placé sur le parcours de l'effort entre vis et organe mobile via l'un des écrous, ainsi qu'un prolongement mécanique de cet élément de transmission d'effort qui s'étend jusqu'au voisinage de l'autre écrou, le pion traversant à la fois ce prolongement mécanique ainsi qu'un élément lié à l'autre écrou, de sorte qu'un décalage anormal de l'élément de transmission d'effort par rapport à la vis se traduit par un cisaillement entre son prolongement mécanique et l'élément lié à l'autre écrou, provoquant la rupture du pion et une coupure de la liaison électrique.

D'autres buts, caractéristiques et avantages de l'invention apparaîtront à la lecture de la description détaillée qui va suivre faite en référence aux figures annexées sur lesquelles :
- la figure 1 est une coupe longitudinale partielle d'un vérin à vis selon l'invention ;
- la figure 2 est une vue en coupe partielle agrandie d'un couple d'écrous équipés d'un pion de détection conforme à l'invention ;
- la figure 3 est une coupe partielle agrandie d'un couple d'écrous équipés d'un pion selon une variante de l'invention ;
- la figure 4 est une coupe partielle agrandie d'un couple d'écrous équipés d'un pion selon une variante de l'invention ;
- la figure 5 est une vue en coupe partielle d'un couple d'écrous selon une variante de l'invention ;
- les figures 6 à 8 représentent une variante de l'invention à cisaillement par transfert de charge ;
- les figures 9 à 12 représentent une variante de l'invention, à moyens de blocage d'un écrou secondaire.

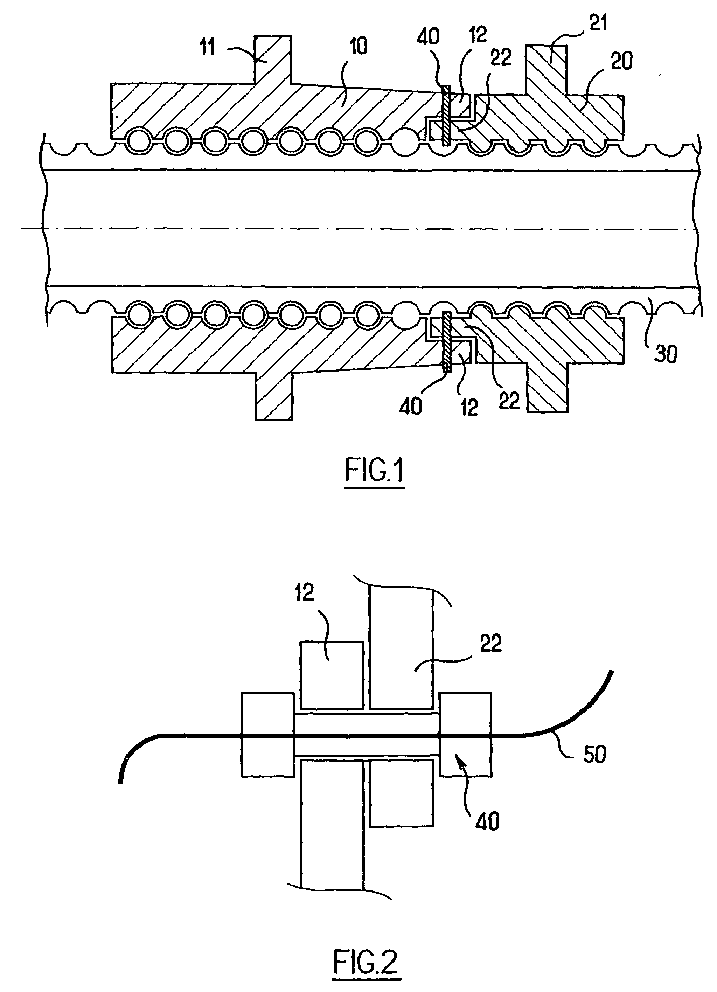

Le couple d'écrous 10, 20 de la figure 1 consiste en un écrou primaire 10 et un écrou secondaire 20 d'un vérin à vis dont la constitution est de type « fait safe ».

En fonctionnement normal, l'écrou primaire 10, ici à billes, est chargé et assure la transmission de la charge entre la vis 30 et l'écrou 10. L'écrou 10 est ici lié en translation avec un plan horizontal réglable (PHR) d'un avion, la vis 30 est liée à la structure de l'avion. On a référencé par 11 et 21 des tourillons d'attache respectifs des écrous 10 et 20, prévus pour être reliés, indépendamment l'un de l'autre, au PHR de l'avion.

Chacun des écrous possède un épaulement circonférentiel 12, 22, disposés en recouvrement l'un de l'autre et s'étendant sur le pourtour de la vis. Aussi ces épaulements 12 et 22 possèdent une face respective en vis à vis, face qui s'étend sensiblement dans la même direction que la vis, ces pièces étant toutefois circulaires.

L'écrou secondaire 20 est également monté sur la vis, en parallèle avec l'écrou primaire 10. Les deux écrous sont maintenus solidaires par l'intermédiaire d'un pion 40 qui traverse les épaulements 12 et 22 et notamment leurs faces en vis à vis.

L'écrou secondaire 20 présente, vis à vis du pas de la vis, un jeu suffisant pour n'être pas chargé en fonctionnement normal où l'écrou primaire 10 reprend la charge.

L'écrou secondaire 20 est ici un simple écrou dont le pas de vis est un simple filet mâle frottant, complémentaire au pas de la vis 30. L'écrou secondaire 20 n'est donc pas dans cet exemple particulier un écrou à bille contrairement à l'écrou primaire 10. Bien entendu, un écrou secondaire à billes serait également envisageable.

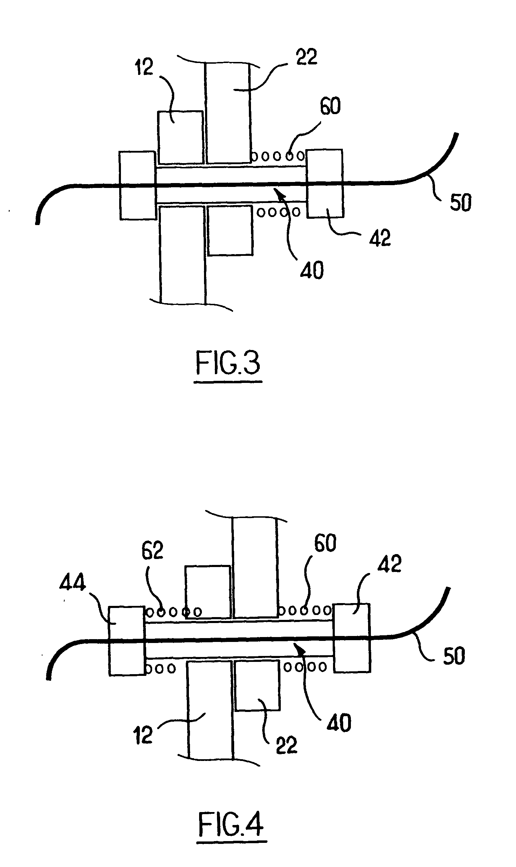

Tel que représenté à la figure 3, un fil conducteur 50 est contenu dans le pion 1, qui possède à cet effet un perçage, et un isolant entourant le fil à l'intérieur de ce perçage.

Ce fil 50 est également relié ici, directement à un système d'alimentation commandant le positionnement du vérin.

Après défaillance de l'écrou 10, l'écrou 20 est mécaniquement placé sur le trajet des charges entre la structure de l'avion et l'organe mobile.

L'apparition de charge sur la voie secondaire de l'ensemble va provoquer simultanément le cisaillement du pion 40 et du fil conducteur 50.

Le fil 50 est ici soudé aux deux extrémités du pion de cisaillement 40 à une partie très rigide assurant la continuité électrique du fil 50 au sein du pion. Cette partie très rigide permet d'assurer une cassure nette de la connexion électrique dans le cas où le déplacement réel du pion 40 est faible.

La rupture de ce fil conducteur 50 va empêcher la circulation du courant électrique surveillé et ainsi signaler la panne.

La coupure du fil 50 va en outre provoquer une commande d'immobilisation du vérin, jusqu'à une intervention de maintenance pour réparer le défaut.

Des attaches entre les deux écrous 10 et 20 peuvent être prévus pour assurer une liaison assez lâche entre les deux écrous. De telles attaches peuvent être liées par exemple aux tourillons 11 et 21. Ces attaches peuvent être également des pions dimensionnés pour supporter des charges plus importantes que le pion de détection 40.

Toutefois ces attaches ou autres pions présentent un jeu suffisant pour permettre que la charge, initialement supportée sur l'écrou primaire 10, et transmise sur l'écrou secondaire 20, provoque, par la disparition de ce jeu, le mouvement de rupture du pion de détection 40.

Typiquement, on prévoit que chacun des écrous primaire et secondaire présente une liaison qui lui est propre avec l'élément commandé, ici le PHR.

Ainsi, le passage de charge sur l'écrou secondaire se fait par chargement de la liaison propre de l'écrou secondaire, et déchargement, alors, de la liaison propre de l'écrou primaire.

Dans une variante, les attaches lâches prévues entre les deux écrous ne sont sollicitées que lorsque l'une des deux liaisons propres de ces écrous ne peut pas transmettre la charge, par exemple sous l'effet d'un endommagement accidentel.

Aussi, si la liaison de l'écrou secondaire avec le PHR ne peut transmettre les contraintes, alors l'écrou secondaire, une fois en charge, transmet les contraintes au PHR via les attaches entre écrous, via l'écrou primaire, puis via la liaison propre de l'écrou primaire avec le PHR.

Selon diverses variantes, le pion de cisaillement peut être placé entre différents couples d'organes voués à se décaler mutuellement en cas d'affaiblissement d'une liaison entre PHR et vis d'actionnement.

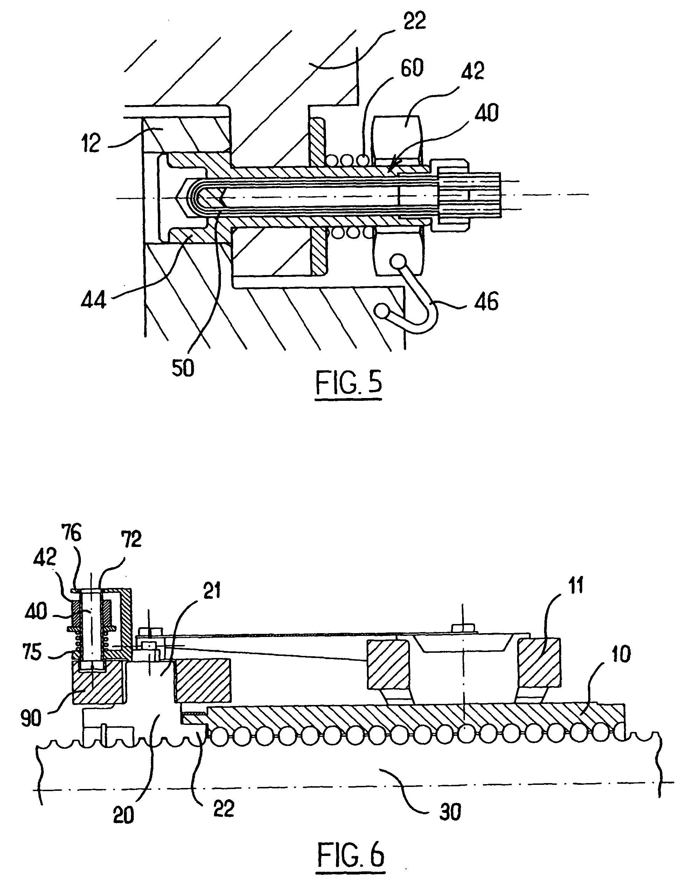

Afin de confirmer la panne par une détection visuelle à l'examen du pion (par éjection des parties séparées par cisaillement) et assurer un désengagement complet des deux parties du fil pour éviter une reconnexion par contact, un ressort 60 peut être intercalé entre une extrémité du pion 40 et une paroi d'un des écrous, tel que représenté sur les figures 3 et 4.

Ainsi, comme représenté à la figure 3, le pion 40 présente avantageusement une tête élargie 42 à une de ses extrémités, un ressort hélicoïdal 60 s'appuyant d'une part sur cette tête élargie 42, d'autre part sur la portion 22 en recouvrement, appartenant à l'écrou 20.

Dans l'exemple de la figure 4, le pion 40 présente deux têtes élargies 42, 44 et est muni de deux ressorts hélicoïdaux 60, 62 placés chacun entre une tête élargie et une portion en recouvrement d'un écrou respectif.

Dans la variante de la figure 5, la tête externe 42 est constituée d'un écrou hexagonal vissé sur le pion, formant une tête amovible, autorisant ainsi la mise en place d'un tel pion dans les alésages respectifs des deux écrous primaires et secondaires du fait que l'extrémité opposée du pion forme, elle, une tête élargie venue de matière.

Sur cette figure 4 également, la liaison électrique 50 décrit un aller-retour dans le pion, à partir de l'extérieur du dispositif.

Ainsi, la liaison électrique 50 s'étend depuis l'extérieur du dispositif, vient décrire un virage à 180° (épingle à cheveux) à l'intérieur de l'écrou primaire 10, puis repart vers l'extérieur traversant à nouveau la liaison de recouvrement entre écrou primaire 10 et écrou secondaire 20. Une telle forme en U permet de n'avoir à connecter les extrémités de la liaison que sur un côté du dispositif, évitant par là une traversée complète du dispositif par une liaison fragile par essence.

En outre, le fil électrique formant la liaison 50 se termine, à ses deux extrémités externes par des excroissances, solidarisant les extrémités du U avec la structure du pion.

En outre, dans le cadre de cette variante également munie d'un ressort 60 pour extension du pion après rupture, le ressort a pour rôle de produire lui-même, après cisaillement, une tension longitudinale nécessaire à la rupture du fil 50.

Plus précisément ici, le jeu entre les écrous primaire 10 et secondaire 20 est suffisant pour produire une rupture par cisaillement du pion 40, mais insuffisant pour rompre en cisaillement le fil électrique 50 qui, lui, présente une certaine élasticité en cisaillement.

Ainsi, la rupture de la liaison 50 apparaît, suite à la rupture du pion, seulement sous l'effet d'un effort d'extension longitudinale exercé par le ressort 60.

On notera que le fil électrique 50 est ici entouré dans une gaine souple isolante, qui outre la souplesse en cisaillement que celle-ci confère plus encore au fil 50, assure une barrière d'isolation entre le fil et l'ensemble des parties métalliques du système, évitant ainsi la production d'un courant parasite avant ou après rupture.

On note en outre que la tête hexagonale 42 est munie d'une liaison souple 46 qui la relie à l'écrou primaire, permettant, après désolidarisation des deux parties de l'écrou suite au cisaillement, de retenir la partie repoussée par le ressort et d'empêcher celle-ci de se perdre dans l'environnement du système.

Selon d'autres variantes, le pion de cisaillement peut être placé entre d'autre couples d'organes voués à se décaler mutuellement en cas d'affaiblissement d'une liaison entre PHR (organe mobile commandé) et vis d'actionnement.

L'affaiblissement en question peut consister simplement en une usure anormale de la liaison écrou primaire/vis, ou encore un endommagement de la liaison entre écrou primaire et organe commandé. Ainsi, une déformation ou rupture peut apparaître au niveau d'une liaison propre entre écrou primaire PHR occasionnant un décalage de positionnements que l'on exploite pour générer le cisaillement du pion.

Dans l'exemple particulier qui va suivre, on place le pion entre deux pièces liées pour l'une à l'écrou secondaire, pour l'autre à un organe solidaire de la liaison PHR/écrou primaire.

Plus spécifiquement, le pion 40 est ici cisaillé par une attache 90 reliant le PHR à l'écrou secondaire, reproduisant ainsi, au niveau de l'écrou secondaire, tout décalage anormal du PHR du à une défaillance de sa liaison via l'écrou primaire.

Ainsi, dans le cas d'un décalage de l'écrou primaire vis à vis de la vis, le PHR, par sa liaison propre à l'écrou primaire, se trouve lui-même anormalement décalé, et, via sa liaison propre avec l'attache de l'écrou secondaire, transfère ce décalage anormal sur cette attache même. L'attache, autorisée à un léger déplacement sur l'écrou secondaire, cisaille alors le pion et active la détection de défaillance.

Avec ce même système, un autre type de défaillance, consistant lui en une rupture ou déformation de la liaison propre entre PHR et écrou primaire, génère un décalage qui se retrouve au niveau de l'attache secondaire et cisaille le pion.

Un troisième type de défaillance, sous la forme d'une rupture de tout ou partie d'une série d'attaches entre écrou primaire et liaison au PHR, à savoir un éventuel mouvement initialement oblique de l'écrou primaire vis à vis de l'axe de la vis, se retrouve là encore sous la forme d'un décalage de l'attache secondaire via les liaisons propres entre PHR et écrou et active la détection par cisaillement.

Il s'agit donc là encore, comme pour l'utilisation de parties de recouvrement entre écrous, d'exploiter une défaillance de liaison entre organe commandé et vis d'entraînement pour générer un cisaillement du pion.

Dans ce mode de réalisation, la liaison entre le PHR et l'écrou secondaire 20 se termine par une plaque de transfert 90 entourant, avec un faible jeu, un tourillon 21 de l'écrou secondaire. La plaque de transfert 90 présente en face externe une réservation dans laquelle pénètre le pion 40, réservation dont la bordure périphérique est recouverte par un organe 70 lié au tourillon 21, prévu donc pour se mouvoir légèrement au-dessus de la plaque de transfert en correspondance avec le jeu du tourillon 21 dans la plaque 90.

On notera qu'ici, l'organe 70 forme ainsi une plaque 75 solidaire du tourillon qui forme un trou oblong dans une direction transversale à la vis, autorisant un léger mouvement de rotation entre tourillon 20 et plaque de transfert 90, mouvement qui peut apparaître en fonctionnement normal entre écrou primaire et écrou secondaire.

Le support 70 est fixé ici sur l'écrou secondaire par une simple vis de maintien.

Plus précisément, ce support 70 s'étend également au-dessus du pion pour former un plateau supérieur à ce dernier, visant à arrêter une partie de celui-ci qui est repoussée par ressort élastique en cas de rupture.

Ainsi, ce support 70 forme deux plateaux parallèles dont l'un 75 entoure le pion à sa sortie de la plaque de reprise des charges 90, et dont l'autre 76 recouvre le pion 40 à son extrémité opposée.

Plus spécifiquement, le plateau supérieur 76 de ce support 70 est traversé par un passage 72 recevant l'extrémité du pion.

Le pion, quant à lui, présente en dessous de ce plateau d'arrêt 72 une excroissance circonférentielle, présentement constituée par un écrou 42 vissé sur le pion, apte à venir en butée contre la circonférence de l'orifice supérieur du support 70, lorsque repoussé vers ce dernier par un ressort hélicoîdal 60 compris entre lui et la partie inférieure du support 70.

Le pion 40 sera cisaillé au niveau de sa tête 44, et ensuite, sous l'action du ressort 60, prenant appui sur le support 70 d'un côté et l'écrou bloqué 42 de l'autre côté, le pion se sépare en deux parties en tirant sur les fils électriques et en les cisaillant par élongation (sans cisailler la gaine protectrice des fils électriques pour éviter les risques de court-circuit).

Un tel aménagement présente un avantage particulier en termes de facilité d'accès. Ainsi, lors d'une opération de maintenance, il est facile d'accéder au pion 40 pour vérification de son état. Cette localisation permet également un meilleur centrage et positionnement du pion 40, et permet d'adopter différentes configurations, avec aisance en termes de limites d'encombrement.

Le pion 40, facilement testé pendant les opérations de maintenance, est remplacé facilement si nécessaire. Par raison de symétrie et pour détecter la panne, quelque soit la position de l'écrou primaire 10, un système de pion identique est préférentiellement installé sur l'autre côté des attaches. La connexion entre les fils électriques des deux pions peut se faire aussi bien en parallèle qu'en série.

Dans le présent exemple de réalisation, le vérin de positionnement du plan horizontal (PHR) étant commandé par trois systèmes de commandes et contrôles, chacun de ces systèmes est relié à un fil électrique qui parcourt le pion.

Le pion 40 contient ainsi trois fils électriques (par exemple) dans lequel chacun de ces fils effectue un aller-retour. On notera que le ressort, outre la séparation des deux éléments de pion après cisaillement, assure un maintien en place du pion dans le support 70 en fonctionnement normal.

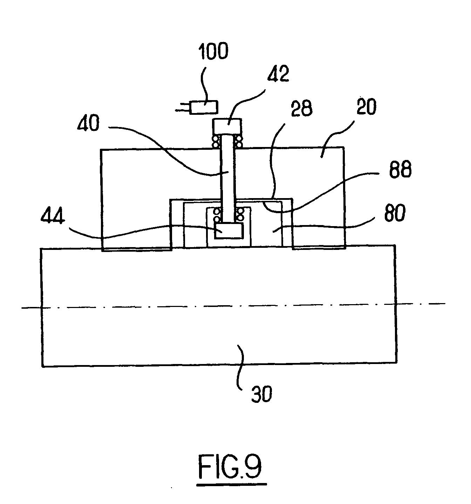

Dans la variante des figures 9 à 12, on souhaite que l'écrou secondaire, lorsque chargé en mode de défaillance, ne puisse continuer à remplir la fonction de transmission du mouvement. Ainsi, on souhaite un blocage de l'écrou secondaire, qui permette d'assurer qu'un fonctionnement en panne dormante ne puisse perdurer.

Typiquement, dans ce type de dispositif, on a adopté des écrous secondaires susceptibles de se gripper lorsque coopérant avec la vis. Toutefois, le grippage présente un certain risque de non apparition. Ainsi les efforts durant le vol ne peuvent pas être assez importants pour que l'écrou secondaire ne se grippe au contact de la vis.

Ainsi dans ce dispositif, l'écrou secondaire 20 est équipé d'un aménagement avantageux en soi pour assurer le blocage de ce dernier après sa mise en charge.

Sur la figure 9, ces aménagements sont constitués du pion précédemment décrit, qui ici, traverse non pas l'écrou secondaire 20 et l'écrou primaire 10, mais l'écrou secondaire 20 et un écrou supplémentaire appelé ci-après contre-écrou et référencé 80.

Sur la figure 9, on voit que le contre-écrou 80 est de taille nettement plus faible que l'écrou secondaire 20, et placé dans une gorge interne annulaire de l'écrou secondaire 20.

Ainsi, dans la coupe longitudinale de la figure 9, le contre-écrou 80 se situe sous l'écrou secondaire, entre deux parois d'extrémité 24 et 26 de cet écrou secondaire 20.

Le contre-écrou 80 présentant lui-même une gorge interne, il y reçoit une tête d'extrémité 44 du pion 40, tandis que la tête externe 42 du pion 40 émerge sur la face externe de l'écrou secondaire 20.

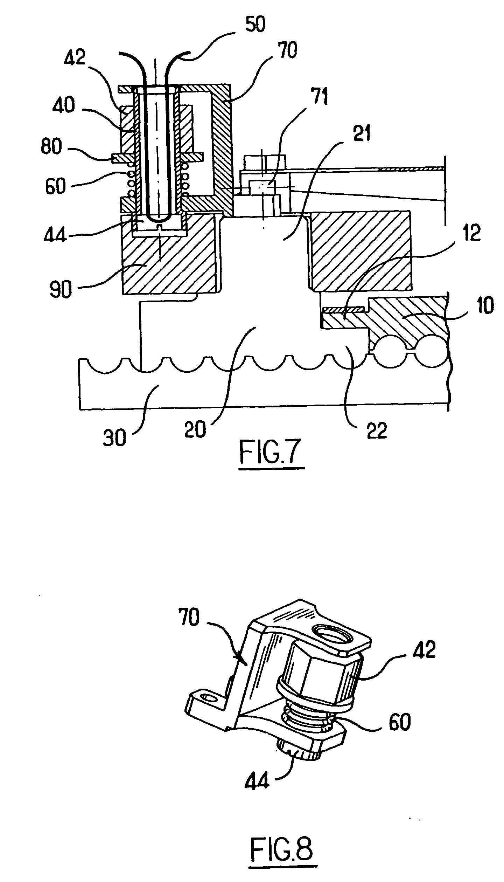

Lorsque l'écrou primaire présente un jeu anormal avec la vis, liée à l'endommagement de la liaison entre écrou primaire et vis, la charge est transmise de l'écrou primaire vers l'écrou secondaire 20, entraînant une réduction du jeu entre écrou secondaire 20 et vis 30. Ce jeu est référencé H2 sur la figure 7.

On notera qu'un jeu H0 prévu initialement entre écrou primaire 10 et vis 30, est inférieur au jeu H2, de sorte que seul un endommagement particulier de la liaison entre vis 30 et écrou primaire 10 peut provoquer une annulation du jeu H2.

En outre, le contre-écrou 80 présente lui-même un jeu H1 avec la vis.

Le jeu H1 est choisi supérieur au jeu H0 de l'écrou primaire 10 mais inférieur au jeu H2 de l'écrou secondaire 20. Ainsi, le jeu entre contre-écrou 80 et vis 30 étant inférieur au jeu entre écrou secondaire 20 et vis, la mise en charge de la vis secondaire ne peut se produire qu'après mise en charge du contre-écrou 80.

Une telle mise en charge finale de l'écrou secondaire 20 sur la vis 30 provoque alors obligatoirement un cisaillement dans le pion 40 et sa rupture. Le pion 40, par sa rupture, provoque la coupure électrique du fil de détection qui le parcourt, ici non représenté.

Dans le présent procédé de réalisation, on exploite la rupture du pion 40 pour autoriser alors une rotation relative entre écrou secondaire et contre-écrou, qui viennent en butée l'un contre l'autre dans un sens axial à la vis, provoquant alors le blocage complet du vérin.

Pour améliorer encore la mise en butée de l'écrou secondaire et du contre-écrou, on notera que le pion 40 est muni d'un ressort dans la partie interne du contre-écrou 80, ressort interne qui provoque une mise en butée de la tête 44 du pion 40 contre le pas de la vis 30. La tête 44 freine alors la rotation du contre-écrou 80, tandis que la rotation de l'écrou secondaire 20 n'est, elle, pas freinée. Le contre-écrou 80 tend même à tourner de manière solidaire avec la vis sous l'effet d'un tel freinage. Ainsi, l'écrou 20 et le contre-écrou 80 butent rapidement l'un contre l'autre et immobilisent le système par un effet de serrage à double écrou.

On notera que, du fait que le contre-écrou 80 est inclus dans l'écrou secondaire 20, c'est à dire borné par deux faces différentes de l'écrou 20, la mise en butée a lieu quelque soit le sens de rotation de la vis.

De manière préférentielle, on veille à ce qu'un coefficient de frottement entre contre-écrou 80 et écrou 20 soit particulièrement faible au niveau de leurs faces venant en contact l'une contre l'autre, de sorte que le contre-écrou 80 ne puisse entrer en rotation avec l'écrou secondaire 20 sans générer les contraintes nécessaires au blocage du système.

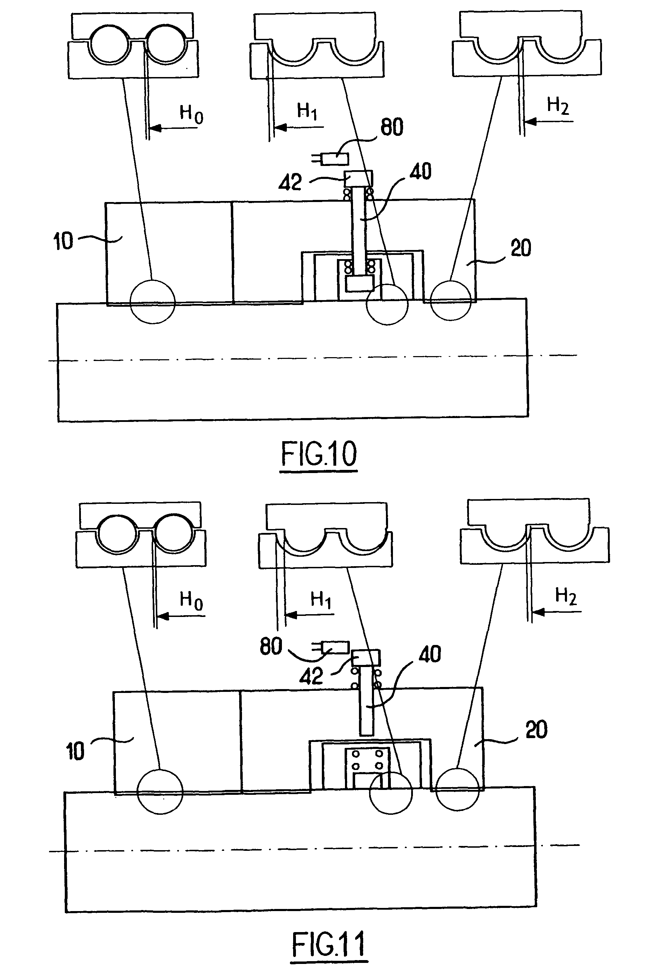

Sur la figure 10, on a représenté un tel système dans son état initial, c'est à dire sans endommagement quelconque de l'écrou primaire 10.

Les figures 10 à 12 représentent respectivement les états des différents jeux H0, H1, H2, dans chacune des trois étapes successives décrites ci-dessus et menant au blocage.

Sur la figure 10, on constate que le jeu H1 du contre-écrou 80 et le jeu H2 de l'écrou secondaire 20 sont suffisants pour ne mettre aucun de ces deux éléments en contact avec la vis lors d'un fonctionnement ordinaire du système.

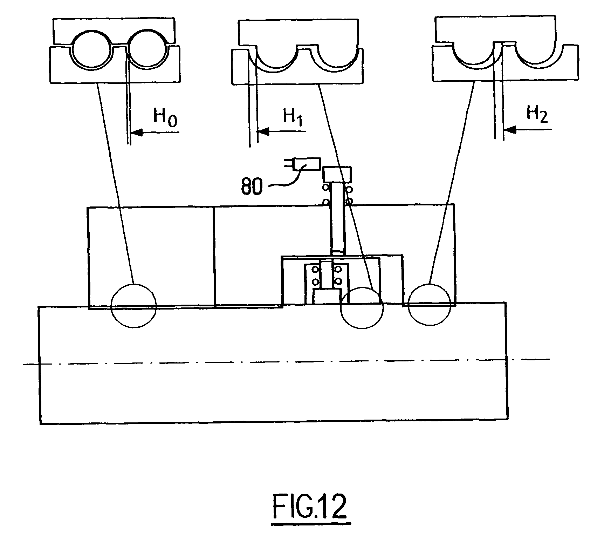

Sur la figure 11, on constate que l'apparition d'une usure au niveau de la liaison entre vis 30 et écrou primaire 10 provoque la mise en appui du contre-écrou 20 contre la vis 30, sans que l'écrou secondaire 20 vienne en appui sur la vis. En d'autres termes, l'écrou secondaire entraîné par l'écrou primaire repousse le contre-écrou 80 contre la vis sans venir lui-même au contact de cette dernière.

Sur la figure 11 également, le pion 40, sous l'effet de cette poussée, vient rompre et l'écrou secondaire est libre d'engager la vis 30.

Sur la figure 12, l'écrou secondaire 20 est venu au contact du pas de vis 30, et transmet la charge du PHR sur la vis. Le contre-écrou 80, entraîné au préalable par la vis 30, est alors en appui contre une face interne de l'écrou secondaire, bloquant ce dernier sur la vis, le système étant alors bloqué. Les jeux H1 et H2 sont alors comblés de sorte que les pas de vis respectifs du contre-écrou 80 et de l'écrou secondaire 20 sont en engagement avec la vis 30.

On notera que cet aménagement de blocage du vérin suite à une mise en charge de l'écrou secondaire 20 présente un avantage certain en lui-même, indépendamment du fait que le pion soit parcouru ou non par une liaison électrique.

Selon une variante avantageuse, on prévoit un interrupteur de détection 100 placé à proximité directe de la tête externe 42 du pion, actionné par la tête 42 lorsqu'elle est repoussée vers l'extérieur de l'écrou secondaire 20 sous l'effet d'un ressort externe du pion 40.

L'interrupteur 100 est par exemple un bras basculant, muni à son extrémité d'une excroissance située en vis à vis de l'écrou secondaire 20.

## Revendications

1. Vérin d'actionnement d'organe mobile comprenant essentiellement une vis (30) d'une part et au moins deux écrous (10, 20, 80) engagés autour de la vis d'autre part, un mouvement relatif entre la vis (30) et les écrous (10, 20, 80) produisant ledit actionnement, **caractérisé en ce qu'**il comporte un pion (40) parcouru par une liaison électrique (50), un élément de transmission d'effort (10, 20) placé sur le parcours de l'effort entre vis et organe mobile via l'un des écrous (10, 20), ainsi qu'un prolongement mécanique (10, 20, 90) de cet élément de transmission d'effort (10, 20) qui s'étend jusqu'au voisinage de l'autre écrou (10, 20), le pion (40) traversant à la fois ce prolongement mécanique (10, 20, 90) ainsi qu'un élément lié à l'autre écrou (10, 20, 80), de sorte qu'un décalage anormal de l'élément de transmission d'effort (10, 20) par rapport à la vis (30) se traduit par un cisaillement entre son prolongement mécanique (10, 20, 90) et l'élément lié à l'autre écrou (10, 20, 80), provoquant la rupture du pion (40) et une coupure de la liaison électrique (50).

2. Vérin d'actionnement selon la revendication 1, **caractérisé en ce qu'**il constitue un vérin à écrous primaire (10) et secondaire (20) liés chacun à l'organe mobile via des liaisons propres respectives, et **en ce que** l'élément de transmission d'effort dont un décalage anormal provoque un cisaillement est constitué par un élément se trouvant sur le trajet des efforts entre vis et organe mobile via l'écrou primaire (10) et **en ce que** le prolongement mécanique (12, 28, 90) provoquant le cisaillement vient de la liaison propre entre écrou secondaire (20) et organe mobile, de sorte que le décalage anormal est transmis sur le pion (40) via la liaison propre de l'écrou secondaire (20).

3. Vérin selon la revendication précédente, **caractérisé en ce que** l'organe de cisaillement est une plaque de transfert (90) recouvrant le pion secondaire (20) et assurant la liaison propre entre écrou secondaire (20) et organe mobile.

4. Vérin d'actionnement selon la revendication 1, **caractérisé en ce que** deux des écrous (10, 20, 80) présentent des portions respectives (12, 22, 28, 78) en recouvrement l'une de l'autre, traversées toutes deux par un même pion (40), le pion (40) s'étendant dans une direction sensiblement transversale à l'axe principal de la vis (30) de sorte qu'un déplacement relatif de ces deux écrous (10, 20, 80) provoque une rupture par cisaillement du pion (40) et une coupure de la liaison électrique (50), l'élément de transmission dont on détecte un décalage anormal étant dans ce cas l'un des écrous (10, 20), le prolongement mécanique de cisaillement étant sa portion en recouvrement (12, 28).

5. Vérin selon l'une quelconque des revendications précédentes, **caractérisé en ce qu'**il constitue un vérin du type à billes, galets ou rouleaux, c'est à dire dans lequel un écrou primaire (10) présente, sur sa face tournée vers la vis (30), une série de billes, galets ou rouleaux assurant les contacts de déplacement entre vis (30) et écrou (10).

6. Vérin selon l'une quelconque des revendications précédentes, **caractérisé en ce que** le pion (40) est muni d'un organe de rappel élastique (60, 62) produisant une force d'écartement sur le pion (40), de sorte qu'une rupture par cisaillement provoque un écartement des deux parties du pion (40) séparées par la rupture.

7. Vérin selon la revendication 6, **caractérisé en ce que** l'organe de rappel (60, 62) est un ressort hélicoïdal entourant le pion (40).

8. Vérin selon la revendication précédente, **caractérisé en ce que** le pion (40) présente une tête élargie (42, 44) à une de ses extrémités, le ressort hélicoïdal (60, 62) s'appuyant d'une part sur cette tête élargie (40, 42), d'autre part sur un élément (12, 22, 28, 88) solidaire d'un des écrous (10, 20, 80).

9. Vérin selon l'une quelconque des revendications précédentes, **caractérisé en ce que** le pion (40) présente deux têtes élargies (42, 44) et est muni de deux ressorts hélicoïdaux (60, 62) placés chacun entre une tête élargie (42, 44) et une portion en recouvrement (12, 22, 28, 88) d'un écrou respectif (10, 20, 80).

10. Vérin selon l'une quelconque des revendications précédentes, **caractérisé en ce que** le pion (40) s'étend selon une direction radiale par rapport à l'axe principal de la vis (30).

11. Vérin selon l'une quelconque des revendications précédentes, **caractérisé en ce que** la liaison électrique (50) décrit un aller et retour dans le pion (40), dont le virage est situé à proximité de l'extrémité du pion (40) côté vis (30).

12. Vérin selon l'une quelconque des revendications précédentes, **caractérisé en ce qu'**un jeu entre les deux écrous est choisi pour produire une rupture par cisaillement du pion (40) sans produire de rupture par cisaillement dans la liaison électrique (50), un ressort (60, 62) étant ménagé sur le pion (40) pour repousser les parties séparées par le cisaillement et provoquer alors la rupture de la liaison par traction longitudinale sur la liaison (50).

13. Vérin selon la revendication 1, **caractérisé en ce que** les deux écrous (10, 20, 80) sont formés d'une part par un écrou secondaire (20) sollicité lors d'une défaillance d'un écrou primaire (10), et d'autre part par un contre-écrou (80), distinct de l'écrou primaire (10), le contre-écrou (80) étant lié en rotation à l'écrou secondaire (20) par le pion (40) de sorte qu'après rupture du pion (40), le contre-écrou (80) est libéré en rotation vis à vis de l'écrou secondaire (20).

14. Vérin selon la revendication précédente, **caractérisé en ce que** le prolongement mécanique est constitué par l'écrou secondaire lui-même.

15. Vérin selon la revendication 13 ou la revendication 14, **caractérisé en ce que** l'écrou secondaire (20) et le contre-écrou (80) présentent des faces respectives en vis à vis et transversales à la direction de la vis (30), prévues pour venir en butée l'une contre l'autre par déplacement relatif dans la direction de la vis (30) et bloquer alors la rotation entre l'écrou secondaire (20) et la vis (30).

16. Vérin selon l'une quelconque des revendications 13 à 15, en combinaison, **caractérisé en ce que** le pion (40) porte une tête (44) dirigée en direction de la vis (30), et un ressort (60, 62) prévu pour repousser cette tête contre la vis (30) à la rupture du pion (40), de manière à freiner la rotation du contre-écrou (80) relativement à la vis après rupture du pion (40).

17. Vérin selon l'une quelconque des revendications 13 à 16, **caractérisé en ce que** des jeux (H1, H2) existent entre contre-écrou (80) et vis (30), et entre écrou secondaire (20) et vis (30), le jeu du contre-écrou (80) étant inférieur au jeu de l'écrou secondaire, de sorte qu'une translation de l'écrou secondaire (20) le long de la vis (30) provoque la rupture du pion (40) sous l'action du contre-écrou avant une coopération mécanique entre l'écrou secondaire (20) et le pas de la vis (30).

18. Vérin d'actionnement selon l'une quelconque des revendications précédentes, **caractérisé en ce que** le pion est muni d'un ressort placé pour séparer deux parties scindées par cisaillement et qu'un élément d'arrêt (70, 76) est placé à proximité du pion (40), présentant une paroi (76) formant obstacle sur le déplacement d'une des parties scindées lorsqu'elle est repoussée par le ressort (60).

19. Vérin d'actionnement selon la revendication précédente, **caractérisé en ce que** l'élément d'arrêt (70, 76) est formé par une pièce (70) à deux parois (75, 76) sensiblement parallèles, l'une (75) traversée par le pion (40) et destinée à cisailler celui-ci, l'autre (76) formant l'obstacle à une partie du pion repoussée par le ressort (60).

20. Vérin d'actionnement selon la revendication précédente, **caractérisé en ce que** le pion (40) inclut une partie destinée à être cisaillée, cette partie étant munie d'un pas de vis et équipée d'un écrou (42) formant tête d'appui pour le ressort (60), et **en ce que** le pion (40) émerge de sa tête (42) à l'opposé du ressort (60), pour traverser la paroi-obstacle (76) de l'élément d'arrêt (70), la tête (42) du pion (40) venant buter contre la paroi-obstacle (76) en cas de rupture du pion (40).

21. Vérin selon l'une quelconque des revendications précédentes, **caractérisé en ce qu'**il constitue un vérin d'actionnement d'organe mobile d'appareil de transport.

22. Vérin selon l'une quelconque des revendications précédentes, **caractérisé en ce qu'**il constitue un vérin d'actionnement d'organe mobile d'aéronef.

## Patentansprüche

1. Spindeltrieb zur Betätigung eines beweglichen Organs, der im wesentlichen einerseits eine Spindel (30) und andererseits wenigstens zwei Muttern (10, 20, 80) umfaßt, die um die Spindel im Eingriff sind, wobei eine Relativbewegung zwischen der Spindel (30) und den Muttern (10, 20, 80) die genannte Betätigung erzeugt, **dadurch gekennzeichnet, daß** er einen Zapfen (40), der von einer elektrischen Verbindung (50) durchlaufen wird, ein Kraftübertragungselement (10, 20), das auf dem Weg der Kraft zwischen der Spindel und dem beweglichen Organ über eine der Muttern (10, 20) plaziert.ist, sowie eine mechanische Verlängerung (10, 20, 90) dieses Kraftübertragungselements (10, 20), die sich bis in die Nähe der anderen Mutter (10, 20) erstreckt, umfaßt, wobei der Zapfen (40) zusammen diese mechanische Verlängerung (10, 20, 90) sowie ein mit der anderen Mutter (10, 20, 80) verbundenes Element durchquert, derart, daß sich eine anomale Verschiebung des Kraftübertragungselementes (10, 20) bezüglich der Spindel (30) in eine Scherung zwischen seiner mechanischen Verlängerung (10, 20, 90) und dem mit der anderen Mutter (10, 20, 80) verbundenes Element überträgt, was den Bruch des Zapfens (40) und eine Unterbrechung der elektrischen Verbindung (50) hervorruft.

2. Spindeltrieb zur Betätigung nach Anspruch 1, **dadurch gekennzeichnet, daß** er einen Spindeltrieb mit Primärmutter (10) und Sekundärmutter (20) bildet, die jeweils über jeweilige eigene Verbindungen mit dem beweglichen Organ verbunden sind, und **dadurch**, daß das Kraftübertragungselement, dessen anomale Verschiebung eine Scherung hervorruft, von einem Element gebildet ist, das sich auf dem Kraftweg zwischen Spindel und beweglichem Organ über die Primärmutter (10) befindet, und **dadurch**, daß die mechanische Verlängerung (12, 28, 90), die die Scherung hervorruft, von der eigenen Verbindung zwischen Sekundärmutter (20) und beweglichem Organ herkommt, derart, daß die anomale Verschiebung über die eigene Verbindung der Sekundärmutter (20) auf den Zapfen (40) übertragen wird.

3. Spindeltrieb nach dem vorhergehenden Anspruch, **dadurch gekennzeichnet, daß** das Scherungsorgan eine Übertragungsplatte (90) ist, die den Sekundärzapfen (20) abdeckt und die eigentliche Verbindung zwischen der Sekundärmutter (20) und dem beweglichen Organ herstellt.

4. Spindeltrieb zur Betätigung nach Anspruch 1, **dadurch gekennzeichnet, daß** zwei der Muttern (10, 20, 80) jeweilige Abschnitte (12, 22, 28, 78) aufweisen, die einander überdecken und alle beide von ein und demselben Zapfen (40) durchlaufen werden, wobei sich der Zapfen (40) in einer Richtung erstreckt, die im wesentlichen quer zur Hauptachse der Spindel (30) verläuft, derart, daß eine relative Verschiebung dieser beiden Muttern (10, 20, 80) einen Scherungsbruch des Zapfens (40) und eine Unterbrechung der elektrischen Verbindung (50) hervorruft, wobei das Übertragungselement, von dem man eine anomale Verschiebung erfaßt, in diesem Fall die eine der Muttern (10, 20) ist, und die mechanische Verlängerung zur Scherung ihr Überdeckungsabschnitt (12, 28) ist.

5. Spindeltrieb nach einem der vorhergehenden Ansprüche, **dadurch gekennzeichnet, daß** er einen Spindeltrieb vom Typ mit Kugeln, Rollen oder Walzen bildet, das heißt, von demjenigen, bei dem eine Primärmutter (10) auf ihrer der Spindel (30) zugewandten Fläche eine Reihe von Kugeln, Rollen oder Walzen aufweist, die die Bewegungsberührungen zwischen Spindel (30) und Mutter (10) sicherstellen.

6. Spindeltrieb nach einem der vorhergehenden Ansprüche, **dadurch gekennzeichnet, daß** der Zapfen (40) mit einem elastischen Rückstellorgan (60, 62) versehen ist, das auf dem Zapfen (40) eine Spreizkraft erzeugt, derart, daß ein Scherungsbruch ein Auseinanderspreizen der beiden durch den Bruch getrennten Teile des Zapfens (40) hervorruft.

7. Spindeltrieb nach Anspruch 6, **dadurch gekennzeichnet, daß** das Rückstellorgan (60, 62) eine wendelförmige Feder ist, die den Zapfen (40) umgibt.

8. Spindeltrieb nach dem vorhergehenden Anspruch, **dadurch gekennzeichnet, daß** der Zapfen (40) an einem seiner Enden einen verbreiterten Kopf (42, 44) aufweist, wobei sich die wendelförmige Feder (60, 62) einerseits auf diesem verbreiterten Kopf (40, 42), andererseits auf einem, mit einer der Muttern (10, 20, 80) einstückigen Element (12, 22, 28, 88) abstützt.

9. Spindeltrieb nach einem der vorhergehenden Ansprüche, **dadurch gekennzeichnet, daß** der Zapfen (40) zwei vergrößerte Köpfe (42, 44) aufweist und mit zwei wendelförmigen Federn (60, 62) versehen ist, die jeweils zwischen einem verbreiterten Kopf (42, 44) und einem Abdeckteil (12, 22, 28, 88) einer jeweiligen Mutter (10, 20, 80) sitzen.

10. Spindeltrieb nach einem der vorhergehenden Ansprüche, **dadurch gekennzeichnet, daß** sich der Zapfen (40) in einer radialen Richtung erstreckt, bezogen auf die Hauptachse der Spindel (30).

11. Spindeltrieb nach einem der vorhergehenden Ansprüche, **dadurch gekennzeichnet, daß** die elektrische Verbindung (50) im Zapfen (40) vor- und zurückläuft, wobei der Wendepunkt nahe dem Ende des Zapfens (40) auf seiten der Spindel (30) liegt.

12. Spindeltrieb nach einem der vorhergehenden Ansprüche, **dadurch gekennzeichnet, daß** ein Spiel zwischen den beiden Muttern gewählt ist, um einen Scherungsbruch des Zapfens (40) zu erzeugen, ohne eine Scherungsunterbrechung in der elektrischen Verbindung (50) zu erzeugen, wobei eine Feder (60, 62) auf dem Zapfen (40) aufgebracht ist, um die durch die Scherung getrennten Teile zurückzudrücken und so die Unterbrechung der Verbindung durch Zug in Längsrichtung an der Verbindung (50) hervorzurufen.

13. Spindeltrieb nach Anspruch 1, **dadurch gekennzeichnet, daß** die beiden Muttern (10, 20, 80) einerseits von einer Sekundärmutter (20), die während eines Ausfalls einer Primärmutter (10) belastet wird, und andererseits von einer Gegenmutter (80), die von der Primärmutter (10) unterschieden ist, gebildet sind, wobei die Gegenmutter (80) mit der Sekundärmutter (20) durch den Zapfen (40) drehverbunden ist, derart, daß nach einem Bruch des Zapfens (40) die Gegenmutter (80) zur Drehung gegenüber der Sekundärmutter (20) freigegeben wird.

14. Spindeltrieb nach dem vorhergehenden Anspruch, **dadurch gekennzeichnet, daß** die mechanische Verlängerung von der Sekundärmutter selbst gebildet ist.

15. Spindeltrieb nach Anspruch 13 oder Anspruch 14, **dadurch gekennzeichnet, daß** die Sekundärmutter (20) und die Gegenmutter (80) jeweilige, gegenüber und quer zur Richtung der Spindel (30) liegende Flächen aufweisen, die vorgesehen sind, durch relative Verschiebung in Richtung der Spindel (30) gegeneinander in Anschlag zu gelangen und so die Drehung zwischen der Sekundärmutter (20) und der Spindel (30) zu blockieren.

16. Spindeltrieb nach einem der Ansprüche 13 bis 15, in Kombination **dadurch gekennzeichnet, daß** der Zapfen (40) einen in Richtung zur Spindel (30) gerichteten Kopf (44), und eine Feder (60, 62) trägt, die vorgesehen ist, um diesen Kopf beim Bruch des Zapfens (40) gegen die Spindel (30) zu schieben, derart, daß nach dem Bruch des Zapfens (40) die Drehung der Gegenmutter (80) relativ zur Spindel gebremst wird.

17. Spindeltrieb nach einem der Ansprüche 13 bis 16, **dadurch gekennzeichnet, daß** Spiel (H1, H2) zwischen der Gegenmutter (80) und der Spindel (30) sowie zwischen der Sekundärmutter (20) und der Spindel (30) vorliegt, wobei das Spiel der Gegenmutter (80) kleiner ist als das Spiel der Sekundärmutter, derart, daß eine Translationsbewegung der Sekundärmutter (20) längs der Spindel (30) den Bruch des Zapfens (40) unter der Wirkung der Gegenmutter vor einer mechanischen Zusammenwirkung zwischen der Sekundärmutter (20) und dem Gewindegang der Spindel (30) hervorruft.

18. Spindeltrieb zur Betätigung nach einem der vorhergehenden Ansprüche, **dadurch gekennzeichnet, daß** der Zapfen mit einer Feder versehen ist, die plaziert ist, um die beiden durch Scherung aufgespaltenen Teile, zu trennen, und daß ein Anschlagelement (70, 76) in der Nähe des Zapfens (40) angeordnet ist, das eine Wand (76) aufweist, die ein Hindernis bei der Bewegung eines der aufgespaltenen Teile bildet, wenn es von der Feder (60) zurückgeschoben wird.

19. Spindeltrieb zur Betätigung nach dem vorhergehenden Anspruch, **dadurch gekennzeichnet, daß** dieses Anschlagelement (70, 76) von einem Teil (70) mit im wesentlichen parallelen Wänden (75, 76) gebildet ist, wobei die eine (75) vom Zapfen (40) durchsetzt ist und dazu bestimmt ist, diesen abzuscheren, während die andere (76) das Hindernis für ein Zapfenteil bildet, das durch die Feder (60) zurückgeschoben wird.

20. Spindeltrieb zur Betätigung nach dem vorhergehenden Anspruch, **dadurch gekennzeichnet, daß** der Zapfen (40) einen Teil umfaßt, der dazu bestimmt ist, abgeschert zu werden, wobei dieser Teil mit einem Gewindegang versehen und mit einer Mutter (42) ausgestattet ist, die einen Anlagekopf für die Feder (60) bildet, und **dadurch**, daß der Zapfen (40) aus seinem Kopf (42) entgegengesetzt zur Feder (60) heraustritt, um die das Hindernis bildende Wand (76) des Anschlagelements (70) zu durchsetzen, wobei der Kopf (42) des Zapfens (40) im Fall des Bruches des Zapfens (40) in Anschlag gegen das Wand-Hindernis (76) kommt .

21. Spindeltrieb nach einem der vorhergehenden Ansprüche, **dadurch gekennzeichnet, daß** er einen Spindeltrieb zur Betätigung eines beweglichen Organs eines Transportgerätes bildet.

22. Spindeltrieb nach einem der vorhergehenden Ansprüche, **dadurch gekennzeichnet, daß** er einen Spindeltrieb zur Betätigung eines beweglichen Organs eines Luftfahrzeuges bildet.

## Claims

1. Jack for actuating a movable member essentially comprising a screw (30) on the one hand and at least two nuts (10, 20, 80) engaged about the screw on the other hand, a relative movement between the screw (30) and the nuts (10, 20, 80) producing the said actuation, **characterized in that** it comprises a pin (40) traversed by an electric connection (50), a force transmission element (10, 20) placed on the path of the force between screw and movable member via one of the nuts (10, 20), and a mechanical extension (10, 20, 90) of this force transmission element (10, 20) which extends right up to the vicinity of the other nut (10, 20), the pin (40) traversing both this mechanical extension (10, 20, 90) and an element connected to the other nut (10, 20, 80), so that an abnormal shift of the force transmission element (10, 20) relative to the screw (30) results in a shearing between its mechanical extension (10, 20, 90) and the element connected to the other nut (10, 20, 80), causing the pin (40) to break and cutting the electric connection (50).

2. Actuation jack according to Claim 1, **characterized in that** it constitutes a jack with a primary nut (10) and secondary nut (20) each connected to the movable member via respective specific connections, and **in that** the force transmission element of which an abnormal shift causes a shearing consists of an element lying on the path of the forces between screw and movable member via the primary nut (10) and **in that** the mechanical extension (12, 28, 90) causing the shearing comes from the specific connection between secondary nut (20) and movable member, so that the abnormal shift is transmitted to the pin (40) via the specific connection of the secondary nut (20).

3. Jack according to the preceding claim, **characterized in that** the shearing member is a transfer plate (90) covering the secondary pin (20) and providing the specific connection between secondary nut (20) and movable member.

4. Actuation jack according to Claim 1, **characterized in that** two of the nuts (10, 20, 80) have respective portions (12, 22, 28, 78) overlapping one another, both traversed by one and the same pin (40), the pin (40) extending in a direction substantially transversal to the main axis of the screw (30) so that a relative movement of these two nuts (10, 20, 80) causes the pin (40) to break by shearing and cuts the electric connection (50), the transmission element of which an abnormal shift is detected being in this case one of the nuts (10, 20), the mechanical shearing extension being its overlapping portion (12, 28).

5. Jack according to any one of the preceding claims, **characterized in that** it constitutes a jack of the ball, roller wheel or roller type, that is to say in which a primary nut (10) has, on its face turned towards the screw (30), a series of balls, roller wheels or rollers providing the movement contacts between screw (30) and nut.

6. Jack according to any one of the preceding claims, **characterized in that** the pin (40) is furnished with an elastic return member (60, 62) producing a separating force on the pin (40), so that a breakage by shearing causes the two parts of the pin (40) separated by the breakage to move apart.

7. Jack according to Claim 6, **characterized in that** the return member (60, 62) is a helical spring surrounding the pin (40).

8. Jack according to the preceding claim,
**characterized in that** the pin (40) has an enlarged head (42, 44) at one of its ends, the helical spring (60, 62) pressing on the one hand on this enlarged head (40, 42), on the other hand on an element (12, 22, 28, 88) integral with one of the nuts (10, 20, 80).

9. Jack according to any one of the preceding claims, **characterized in that** the pin (40) has two enlarged heads (42, 44) and is furnished with two helical springs (60, 62) each placed between an enlarged head (42, 44) and an overlapping portion (12, 22, 28, 88) of a respective nut (10, 20, 80).

10. Jack according to any one of the preceding claims,
**characterized in that** the pin (40) extends in a radial direction relative to the main axis of the screw (30).

11. Jack according to any one of the preceding claims, **characterized in that** the electric connection (50) follows an outward and return path in the pin (40), the bend in it being situated close to the end of the pin (40) on the screw side (30).

12. Jack according to any one of the preceding claims, **characterized in that** a clearance between the two nuts is chosen to produce a breakage by shearing of the pin (40) without producing a breakage by shearing in the electric connection (50), a spring (60, 62) being made on the pin (40) to push away the parts separated by the shearing and then cause the breakage of the connection by longitudinal traction on the connection (50).

13. Jack according to Claim 1, **characterized in that** the two nuts (10, 20, 80) are formed on the one hand by a secondary nut (20) acted upon during a failure of a primary nut (10), and on the other hand by a locknut (80), distinct from the primary nut (10), the locknut (80) being rotatably connected to the secondary nut (20) by the pin (40) so that after the pin (40) breaks, the locknut (80) is free to rotate relative to the secondary nut (20).

14. Jack according to the preceding claim, **characterized in that** the mechanical extension consists of the secondary nut itself.

15. Jack according to Claim 13 or Claim 14, **characterized in that** the secondary nut (20) and the locknut (80) have respective faces, facing one another and transverse to the direction of the screw (30), provided to butt against one another by relative movement in the direction of the screw (30) and then immobilize the rotation between the secondary nut (20) and the screw (30).

16. Jack according to any one of Claims 13 to 15, in combination, **characterized in that** the pin (40) supports a head (44) directed in the direction of the screw (30) and a spring (60, 62) provided to push this head against the screw (30) on the breakage of the pin (40), so as to restrain the rotation of the locknut (80) relative to the screw after the breakage of the pin (40).

17. Jack according to any one of Claims 13 to 16, **characterized in that** clearances (H1, H2) exist between locknut (80) and screw (30), and between secondary nut (20) and screw (30), the clearance of the locknut (80) being less than the clearance of the secondary nut, so that a translation of the secondary nut (20) along the screw (30) causes the pin (40) to break under the action of the locknut before a mechanical interaction between the secondary nut (20) and the pitch of the screw (30) .

18. Actuation jack according to any one of the preceding claims, **characterized in that** the pin is furnished with a spring placed to separate two parts separated by shearing and that a stopping element (70, 76) is placed close to the pin (40), having a wall (76) forming an obstacle to the movement of one of the separated parts when it is pushed away by the spring (60).

19. Actuation jack according to the preceding claim, **characterized in that** the stopping element (70, 76) is formed by a piece (70) with two substantially parallel walls (75, 76), one (75) traversed by the pin (40) and intended to shear the latter, the other (76) forming the obstacle to a part of the pin pushed away by the spring (60).

20. Actuation jack according to the preceding claim, **characterized in that** the pin (40) includes a part intended to be sheared, this part being furnished with a screw pitch and fitted with a nut (42) forming a bearing head for the spring (60), and **in that** the pin (40) emerges from its head (42) at the opposite side of the spring (60), to traverse the obstacle-wall (76) of the stopping element (70), the head (42) of the pin (40) coming to butt against the obstacle-wall (76) in the event of breakage of the pin (40).

21. Jack according to any one of the preceding claims, **characterized in that** it constitutes a jack for actuating a movable member of a transport device.

22. Jack according to any one of the preceding claims, **characterized in that** it constitutes a jack for actuating a movable member of an aircraft.
